# EUROPÄISCHE PATENTSCHRIFT

(11) **EP 0 818 028 B1**
(45) Veröffentlichungstag und Bekanntmachung des Hinweises auf die Patenterteilung: **16.06.1999**
(21) Anmeldenummer: 96911985.8
(22) Anmeldetag: 01.04.1996
(51) Int. Cl.: G06T 7/00

(54) **VERFAHREN ZUR GROBKLASSIFIZIERUNG VON OBJEKTEN**
METHOD OF COARSE CLASSIFICATION OF OBJECTS
PROCEDE DE CLASSIFICATION SOMMAIRE D'OBJETS

(30) Priorität: 31.03.1995 DE 19512241; 12.10.1995 DE 19538004
(43) Veröffentlichungstag der Anmeldung: 14.01.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: WAGNER, Thomas, D-91052 Erlangen (DE); PLANKENSTEINER, Peter, D-91301 Forchheim (DE); BAUER, Norbert, D-91058 Erlangen (DE)
(74) Vertreter: Schoppe, Fritz, Dipl.-Ing.
(86) Internationale Anmeldenummer: EP9601426
(87) Internationale Veröffentlichungsnummer: WO9630872

(56) Entgegenhaltungen:
- US-A- 4 514 816
- IEEE: PROCEEDINGS OF THE INTERNATIONAL JOINT CONFERENCE ON PATTERN RECOGNITION, CORONADO, US, 8-11 November 1976, Band 3, Seiten 567-575 XP002008967
- TRANSACTIONS OF THE INSTITUTE OF MEASUREMENT AND CONTROL, Bd. 10, Nr. 5, Oktober 1988 - Dezember 1988, DORKING GB, Seiten 265-272, XP000098654 G.A.W.WEST ET AL: "Image processing and understanding for automatic inspection"
- PROCEEDINGS 6th EUROPEAN SIGNAL PROCESSING CONFERENCE, BRUSSEL, BE, 24-27 August 1992 Band 1, Seiten 23-30 XP000348618 J.-P. ANTOINE: "Wavelet analysis in image processing"

## Beschreibung

Die vorliegende Erfindung betrifft ein Verfahren zur Grobklassifizierung von Objekten, insbesondere zur Grobklassifizierung von Objekten in einer frei definierbaren Umgebung.

Vorab werden nachfolgend einige der in der folgenden Beschreibung verwendeten Begriffe näher erläutert:
Objekt:
   Ein Objekt ist ein Gegenstand, der durch vorbestimmte Objektdaten definiert ist. Solche Objektdaten können beispielsweise Bilddaten sein, die das Objekt anhand dessen Form, Farbe, Textur oder Größe definieren.
Objekttypen:
   Die Objekte sind in unterschiedliche Objekttypen aufgeteilt. Ein Bleistift ist z.B. ein Objekt, das in unterschiedliche Objekttypen, nämlich einen Bleistift des Typs B1 und einen Bleistift des Typs B2, unterteilt ist.
Objektklasse:
   Eine Objekt- oder Typklasse umfaßt eine zusammengehörige Gruppe von Objekttypen. Dies wären in dem oben beschriebenen Beispiel beispielsweise alle Bleistifte.
Typidentifikation:
   Eine Typidentifikation ermöglicht eine Unterscheidung von Objekten innerhalb einer Objektklasse.

Bekannte Verfahren aus dem Stand der Technik finden in der industriellen Praxis ihre Anwendung, in der eine Typidentifikation von Objekten in einer definierten Umgebung durchgeführt wird. Mit solchen bekannten Verfahren zum Mustervergleich aufgrund von Signalen (z.B. aus Bildern der Objekte) lassen sich Informationen über den Objekttyp gewinnen. Auf diese Weise ist es beispielsweise möglich, einen Bleistift des Typs B1 von einem Bleistift des Typs B2 zu unterscheiden, oder eine Kaffeetasse des Typs K1 von einer unterschiedlich geformten Kaffeetasse des Typs K2 zu unterscheiden.

Bei den oben beschriebenen Verfahren werden aus vorhandenen Signalen Merkmalsdaten herausgezogen. Beispielsweise wird ein Bleistift des Typs B1 durch eine Kombination unterschiedlicher Merkmalsdaten beschrieben und unterscheidet sich von einem Bleistift des Typs B2 bzgl. einzelner Merkmalsdaten.

Ein solches bekanntes Verfahren zur Typidentifikation von Objekten ist nach einer Lernphase mit unterschiedlichen Repräsentanten einer Objektklasse, z.B. unterschiedlichen Kaffeetassen, z.B. des Objekttyps Kaffeetasse K1, in der Lage, auch andere Repräsentanten dieses Objekttyps Kaffeetasse K1 korrekt zu identifizieren.

Mit anderen Worten verwendet ein aus dem Stand der Technik bekanntes Klassifizierungssystem im wesentlichen zwei Phasen, nämlich eine Lern- und eine Klassifizierungsphase.

Während der Lernphase werden dem System bestimmte Merkmale einzelner Objekttypen eingegeben, so daß das System während der Klassifizierungsphase in der Lage ist, Objekte dieser Objekttypen zu erkennen.

Ein Nachteil des oben beschriebenen Standes der Technik besteht darin, daß nur solche Objekte erfaßt werden, die genau definiert sind. Eine Einordnung von Objekten in Objektklassen ist somit nicht möglich.

Mit anderen Worten ist es nicht möglich, unterschiedliche Objektklassen zu unterscheiden. Eine Objektklasse umfaßt alle Objekte eines Objekttyps. Bei dem oben beschriebenen Beispiel bilden z.B. alle Bleistifte die Objektklasse B, und alle Kaffeetassen bilden die Objektklasse K. Eine solche Unterscheidung zwischen unterschiedlichen Objektklassen oder Typklassen wird als Typklassenidentifikation oder Grobklassifikation bezeichnet.

Auf den ersten Blick erscheint das Problem der Grobklassifikation einfacher als das der Objektidentifikation, da ein menschlicher Betrachter beispielsweise ohne weiteres einen Bleistift von einer Kaffeetasse unterscheiden kann, jedoch bei der Unterscheidung unterschiedlicher Kaffeetassen diese genauer betrachten muß. Dieser Eindruck trügt jedoch, da das dem Menschen verfügbare Hintergrundwissen, das offensichtlich zu dieser Unterscheidung herangezogen wird, technisch nicht implementierbar ist.

In IEEE: PROCEEDINGS OF THE INTERNATIONAL JOINT CONFERENCE ON PATTERN RECOGNITION, CORONADO, US, 8-11 Nov. 1976, Band 3, Seiten 567-475; T.D. GARVEY: "An experimeent with a system for locating objects in multisensory images" ist ein Experiment mit einem System zum Lokalisieren von Objekten in Bildern beschrieben. Das System basiert darauf, daß spezifische Merkmalssätze existieren, die ein Zielobjekt von anderen Objekten in einer Szene unterscheiden. Das System verwendet eine Tabelle, in der bis zu 15 Objekte aufgelistet sind, die dem System bekannt sind. Jedem bestimmten Objekt ist ein bestimmter Satz von Parametern, wie z.B. Höhe, Helligkeit, usw. zugeordnet. Aufgrund dieser Parameterwerte können die einzelnen Objekte voneinander unterschieden werden. Zusätzlich verwendet das System bestimmte Beziehungen, die zwischen den einzelnen Elementen bestehen, so z.B. daß ein Telefon auf einer Tischoberfläche angeordnet ist. Die Parameter der einzelnen Objekte werden während einer interaktiven "Sitzung" mit dem System erzeugt, bei der Objekte dem System in verschiedenen Bildern "gezeigt" werden.

In TRANSACTIONS OF THE INSTITUTE OF MEASUREMENT AND CONTROL; Band 10, Nr. 5, Oktober 1988 - Dezember 1988, DORKING GB, Seiten 265-272, G.A.W. WEST, ET AL: "Image Processing and understanding for automatic inspection" ist ein Verfahren beschrieben, bei dem beispielsweise Unterlegscheiben unterschiedlicher Größe anhand einer Interpretation identifiziert und sortiert werden. Die Interpretation wird auf der Grundlage eines Vergleichs einfacher Merkmale der Unterlegscheiben durchgeführt. Unter der Annahme, daß die Objekte, die zu derselben Klasse gehören, ähnliche Merkmalswerte aufweisen, z.B. Unterlegscheiben mit einer bestimmten Größe haben einen ähnlichen Durchmesser, und daß Objekte, die zu unterschiedlichen Klassen gehören, unterschiedliche Merkmalswerte haben, z.B. zwei Unterlegscheiben mit unterschiedlicher Größe und unterschiedlichem Durchmesser, ist es durch einen einfachen Vergleich der Größenabmessung möglich, die Unterlegscheiben zu unterscheiden.

Ausgehend von diesem Stand der Technik liegt der vorliegenden Erfindung die Aufgabe zugrunde, ein Verfahren zur Grobklassifizierung von Objekten in einer frei definierbaren Umgebung zu schaffen.

Diese Aufgabe wird durch ein Verfahren nach Anspruch 1 gelöst.

Die vorliegende Erfindung schafft ein Verfahren zur Grobklassifizierung von Objekten in einer frei definierbaren Umgebung, wobei das Verfahren eine Lernphase und eine Klassifizierungsphase einschließt, bei dem
während der Lernphase für mehrere Objekte einer Objektklasse gleichartige typische Merkmalsdaten aus den das zu Klassifizierende Objekt definierenden Objekdaten extrahiert und in eine Klassifizierungsvorrichtung eingelesen werden, wodurch eine Grobklasse definiert wird; und
während der Klassifizierungsphase Objektdaten eines zu klassifizierenden Objekts erfaßt werden, und das zu klassifizierende Objekt ab einem bestimmten Grad der Übereinstimmung der während der Lernphase eingelesenen Merkmalsdaten mit den erfaßten Objektdaten als zu der definierten Grobklasse gehörend erkannt wird.

Bevorzugte Weiterbildungen der vorliegenden Erfindung sind in den Unteransprüchen definiert.

Anhand der beiliegenden Zeichnung wird nachfolgend das erfindungsgemäße Verfahren näher beschrieben. Es zeigt:

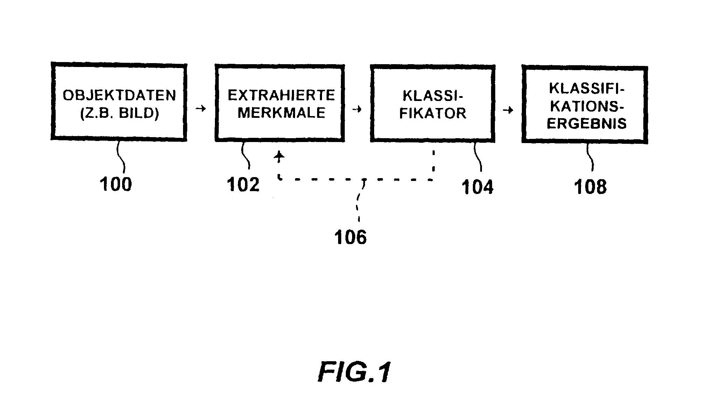

- Fig. 1: ein Blockdiagramm, das die Klassifizierungsphase des Verfahren darstellt.

Vor einer detaillierten Beschreibung der vorliegenden Erfindung werden nachfolgend ein weiterer verwendeter Begriff genauer definiert.
Grobklassifikation:
   Eine Typklassenidentifikation oder Grobklassifikation ermöglicht die Unterscheidung zwischen unterschiedlichen Objektklassen.

Die Grobklassifikation ist also z.B. in der Lage, zwischen einem Bleistift und einer Kaffeetasse zu unterscheiden. Ferner ist es mittels der Grobklassifikation möglich, einem beliebigen Objekt eine Objektklasse zuzuordnen. Z. B. wird ein beliebiger, dem Klassifizierungssystem bisher unbekannter Bleistift als Bleistift erkannt.

Für die Grobklassifikation ist es erforderlich, aus einer Vielzahl von Objektdaten eine Mehrzahl von typischen Merkmalsdaten zu bestimmen, anhand der eine Klassifizierung der unterschiedlichen Objektklassen möglich ist. Bei dem obigen Beispiel des Bleistifts und der Kaffeetasse wären typische Merkmalsdaten solche, aus denen ableitbar ist, daß ein Bleistift lang und spitz ist, wohingegen eine Kaffeetasse kompakt ist und einen Henkel aufweist. Anhand solcher typischer Merkmalsdaten ist die Grobklassifikation zwischen einem Bleistift und einer Kaffeetasse möglich.

Das erfindungsgemäße Verfahren zur Grobklassifizierung von Objekten umfaßt eine Lernphase und eine Klassifizierungsphase.

Während der Lernphase werden für mehrere Objekte einer Objektklasse gleichartige typische Merkmalsdaten in eine Klassifizierungsvorrichtung eingelesen. Hierdurch wird eine Grobklasse definiert.

Bei einem bevorzugten Ausführungsbeispiel wird einer Klassifizierungsvorrichtung eine sogenannte Lernstichprobe angeboten, mit deren Hilfe sich die Klassifizierungsvorrichtung selbst konfiguriert ("lernt"). Die angebotene Lernstichprobe kann z. B. aus einer Mehrzahl von Bildern, die unterschiedlichen Grobklassen angehören bestehen. Beispielsweise kann eine Klasse 1 Bilder von unterschiedlichen Zigarettenschachteln enthalten, während eine weitere Klasse 2 Bilder von unterschiedlichen Händen enthält.

Es wird darauf hingewiesen, das während der Lernphase nur eine Klasse oder eine Vielzahl von Klassen "gelernt" werden kann. Dies hängt vom jeweiligen Einsatzzweck der Klassifizierungsvorrichtung ab.

Durch das "Lernen" ist die Klassifizierungsvorrichtung in der Lage, unbekannte Bilder, die zu der oder einer eingelernten Klasse gehören, der entsprechenden Klasse richtig zuzuordnen. Dies wird im allgemeinen durch eine sogenannte Teststichprobe unter Beweis gestellt, die für die Klassifizierungsvorrichtung unbekannte Bilder der entsprechenden Klasse enthält. Die Erkennungsrate auf die Teststichprobe ist ein Maß dafür, wie gut die Klassifizierungsvorrichtung auf das zugrundeliegende Erkennungsproblem angepaßt ist.

Gemäß einem weiteren Ausführungsbeispiel können als Eingangsdaten auch sogenannte Merkmalsdaten der zu klassifizierenden Objekte verwendet werden. Diese typischen Merkmalsdaten schließen Maßzahlen ein, die aus einem das Objekt beschreibenden Datensatz berechnet werden. Der Datensatz umfaßt z.B. die Fourierkoeffizienten einer Bilddarstellung des Objekts, oder Statistiken über die in der Bilddarstellung enthaltenen Grauwerte, Wavelets, etc.. Diese Merkmale bzw. die Merkmalsdaten müssen sowohl während der Lernphase und während der Teststichprobe gleichartig berechnet werden.

Durch die Erkennungsrate auf die Teststichprobe kann beurteilt werden, wie gut ein Satz von typischen Merkmalsdaten für ein Erkennungsproblem geeignet ist. So kann sich z.B. bei Verwendung von Fourierkoeffizienten eine Erkennungsrate von 99% auf die Teststichprobe ergeben, wohingegen bei der Verwendung von Wavelets eine Erkennungsrate von 99,5% erreicht wird.

Durch das automatische Durchtesten unterschiedlicher Sätze von typischen Merkmalsdaten wird ein für die Grobklassifikation optimaler Satz von typischen Merkmalsdaten erreicht.

Während der Klassifizierungsphase werden Objektdaten eines zu klassifizierenden Objekts erfaßt, und das zu klassifizierende Objekt wird ab einem bestimmten Grad der Übereinstimmung der während der Lernphase eingelesenen Merkmalsdaten mit den erfaßten Objektdaten als zu der definierten Grobklasse gehörend erkannt.

Anhand der Fig. 1 wird nachfolgend die Klassifizierungsphase näher beschrieben.

In einem Schritt 100 werden die Objektdaten eines zu klassifizierenden Objekts, das durch diese Objektdaten definiert ist, erfaßt. Diese Objektdaten können z. B. durch ein Bild des zu klassifizierenden Objekts gebildet sein.

Im Schritt 102 werden dann die Objektdaten mit den Merkmalsdaten verglichen. Solche Merkmale können beispielsweise die Form, Farbe, Textur oder Größe des Objekts darstellen.

Im Schritt 104 werden mittels eines Klassifikators typische Merkmalsdaten aus den erfaßten Objektdaten oder aus den extrahierten Merkmalen erfaßt, die dazu geeignet sind, die Objektklasse des zu klassifizierenden Objekts festzulegen.

Durch einen Rückgriff auf die extrahierten Merkmale (gestrichelter Pfeil 106) unterscheidet der Klassifikator zwischen Merkmalsschwankungen innerhalb eines Objekttyps (z.B. unterschiedliche Längen und Farben von Bleistiften) und zwischen den Schwankungen zwischen unterschiedlichen Objekttypen (Bleistifte und Kaffeetassen), so daß die typischen Merkmalsdaten erfaßt werden können.

Anschließend wird der Grad der Übereinstimmung der Objektdaten mit den typischen Merkmalsdaten bestimmt.

Danach wird das zu klassifizierenden Objekts zu der definierten Grobklasse zugeordnet, wenn ein vorbestimmter Übereinstimmungsgrad bestimmt wurde.

Wenn es erwünscht ist, kann in einem Schritt 108 das Klassifikationsergebnis angezeigt werden.

Nachfolgend wird kurz ein Beispiel für ein System zur Durchführung des erfindungsgemäßen Verfahrens beschrieben. Ein solches System besteht im wesentlichen aus zwei Komponenten. Es ist ein sogenanntes Einlernmodul vorgesehen, mittels dem Objektdaten einer neuen Objekt- oder Typklasse aufgenommen werden. Diese Objektdaten können beispielsweise in der Form von Bilddaten vorliegen.

Ferner ist ein Erkennungs- oder Klassifikationsmodul vorgesehen, mittels dem während eines fortlaufenden Betriebs permanent die Objekte anhand der erfaßten Objektdaten und der darin enthaltenen typischen Merkmalsdaten zu einer Objektoder Typklasse zugeordnet werden.

Das Erkennungs- oder Klassifikationsmodul umfaßt eine Auswertungshardware, die beispielsweise aus einer CCD-Kamera (Monochrom oder Farbe), einem Frame Grabber, der mit einem digitalen Signalprozessor zur Leistungssteigerung ausgerüstet sein kann, und aus einer Berechnungseinheit, die die Datenauswertung durchführt, besteht.

Im allgemeinen können die Objekte durch den Benutzer betitelt sein, wenn die entsprechenden Objektdaten durch das Einlernmodul aufgenommen werden. Die Objekte können allerdings ebenfalls durch das erste Bild einer aufgenommenen Klasse repräsentiert werden. Dann ist eine weiteres Eingreifen des Benutzers nicht mehr notwendig.

Vorteilhafterweise erfolgt die Erfassung der Objektdaten bei einer konstanten Beleuchtung. Dies ist jedoch keine zwingende Voraussetzung, da das erfindungsgemäße Verfahren auch nach typischen Merkmalsdaten sucht, die beleuchtungsunabhängig sein können.

Der Auswertungsalgorithmus berechnet zuerst beliebige Bildmerkmale, wie z.B. Farbe, Umfang, Textur oder Größe des Objekts, und anschließend werden aus diesen Bildmerkmalen die typischen Merkmalsdaten abgeleitet, die zur Unterscheidung der Objekt- oder Typklassen dienen.

Ein bekannter Auswertungsalgorithmus ist z.B. der sogenannte MELT-Algorithmus.

Nachfolgend werden einige Beispiele für die Anwendung des erfindungsgemäßen Verfahrens beschrieben.

Bei einer Kameraüberwachung eines Fertigungsroboters kann anhand des erfindungsgemäßen Verfahrens festgestellt werden, ob sich ein Mensch (Objektklasse A) oder nur das normale Arbeitsgerät (Objektklasse B) im Aktionsbereich der Maschine befindet. Ein Mensch wird auch dann der Typklasse A zugeordnet, wenn er sich im Aussehen und in der Bewegung von dem bisher dem System präsentierten Menschen unterscheidet, da das erfindungsgemäße Verfahren lediglich auf typische Merkmalsdaten zurückgreift, die als für einen Menschen typisch erkannt wurden.

Ein weiteres Beispiel ist die Müllsortierung. Dort ließen sich beispielsweise Objektklassen bilden, die nicht mehr direkt an meßbare Stoffeigenschaften (Infrarot-Spektrogramm) gebunden sind. Vielmehr wird jetzt aus einer Kombination von z.B. optischen Merkmalen, wie Form, Farbe, Textur und Größe auf die Zugehörigkeit zu einer Objektklasse, wie z.B. Verbundstoff, Folie oder Plastikflasche geschlossen.

Eine Grobklassifikation von Objekten ist auch bei der Analyse von nicht-standardisierten Bildsequenzen, wie z.B. dem Straßenverkehr oder wie es durch eine Kamera eines Haushaltsroboters aufgenommen wird etc., von Bedeutung. Die einzelnen Objektklassen werden von dem erfindungsgemäßen Verfahren selbständig auf der Grundlage der zur Verfügung stehenden Objektdaten, insbesondere der typischen Merkmalsdaten, erkannt.

Ein weiteres Beispiel für die Verwendung des erfindungsgemäßen Verfahrens liegt beispielsweise in der Analyse des Inhaltes einer Bildszene. Mittels des erfindungsgemäßen Verfahrens ist es möglich, festzustellen, welche Objektklassen sich im Bild befinden. Mit der Bezeichnung Bild ist hiermit eine frei definierte Umgebung bezeichnet, innerhalb derer sich die zu klassifizierenden Objekte befinden.

Es wird darauf hingewiesen, daß das erfindungsgemäße Verfahren die Grobklassifikation von Objekten in unterschiedlichen Objektklassen in einer frei definierbaren Umgebung und anhand von sogenannten typischen Merkmalsdaten durchführt. Eine definierte Umgebung und eine genaue Kenntnis aller Objektdaten des zu klassifizierenden Objekts sind nicht notwendig.

Bei dem bevorzugten Ausführungsbeispiel wird eine Grobklassifikation von Objekten durchgeführt, welche durch eine Bildszene oder durch Bildsequenzen erfaßt werden. Bereits erwähnt wurde, daß es sich bei den zu klassifizierenden Objekten um solche Objekte handeln kann, die aufgrund von Infrarot-Spektrogrammen erfaßt werden. Gleichfalls kommen Objekterfassungen durch Massenspektrogramme in Betracht. Anstelle einer derartigen Erfassung optischer Daten ist es gleichfalls möglich, Objekte anhand von akustischen Daten einer Grobklassifikation mittels des erfindungsgemäßen Verfahrens zu unterwerfen.

## Patentansprüche

1. Verfahren zur Grobklassifizierung von Objekten in einer frei definierbaren Umgebung, wobei das Verfahren eine Lernphase und eine Klassifizierungsphase einschließt,
dadurch gekennzeichnet,
daß während der Lernphase für mehrere Objekte einer Objektklasse gleichartige typische Merkmalsdaten (102) aus den das zu Klassifizierende Objekt definierenden Objekdaten extrahiert und in eine Klassifizierungsvorrichtung (104) eingelesen werden, wodurch eine Grobklasse definiert wird; und
daß während der Klassifizierungsphase Objektdaten (100) eines zu klassifizierenden Objekts erfaßt werden, und das zu klassifizierende Objekt ab einem bestimmten Grad der Übereinstimmung der während der Lernphase eingelesenen Merkmalsdaten (102) mit den erfaßten Objektdaten als zu der definierten Grobklasse gehörend erkannt wird.

2. Verfahren nach Anspruch 1, dadurch gekennzeichnet, daß
während der Lernphase für mehrere Objekte einer weiteren Objektklasse gleichartige typische Merkmalsdaten (102) in die Klassifizierungsvorrichtung (104) eingelesen wird, wodurch eine weitere Grobklasse definiert wird.

3. Verfahren nach Anspruch 1 oder 2, dadurch gekennzeichnet, daß
das Einlesen der typischen Merkmalsdaten während der Lernphase das Erfassen von Bilddarstellungen der Objekte einer Objektklasse einschließt.

4. Verfahren nach Anspruch 1 oder 2, dadurch gekennzeichnet, daß
das Einlesen der typischen Merkmalsdaten während der Lernphase das Eingeben von Maßzahlen einschließt, die aus einem das Objekt beschreibenden Datensatz berechnet werden.

5. Verfahren nach Anspruch 4, dadurch gekennzeichnet, daß
das der Datensatz die Fourierkoeffizienten einer Bilddarstellung des Objekts, oder Statistiken über die in der Bilddarstellung enthaltenen Grauwerte, Wavelets, etc. enthält.

6. Verfahren nach einem der Ansprüche 1 bis 5, dadurch gekennzeichnet,
daß die Klassifizierungsphase folgende Schritte umfaßt:
a) Erfassen der Objektdaten des zu klassifizierenden Objekts;
b) Vergleichen der erfaßten Objektdaten mit den typischen Merkmalsdaten;
c) Bestimmen des Grades der Übereinstimmung der Objektdaten mit den typischen Merkmalsdaten;
d) Zuordnen des zu klassifizierenden Objekts zu der definierten Grobklasse, wenn im Schritt c) ein vorbestimmter Übereinstimmungsgrad bestimmt wird; und
d) Anzeigen des Klassifizierungsergebnisses,

7. Verfahren nach einem der vorhergehenden Ansprüche, dadurch gekennzeichnet,
daß die Objektdaten und die typischen Merkmalsdaten optische Daten sind.

8. Verfahren nach einem der vorhergehenden Ansprüche, dadurch gekennzeichnet,
daß die Objektdaten und die typischen Merkmalsdaten die Farbe, den Umfang und die Textur oder die Größe des zu klassifizierenden Objekts umfassen.

9. Verfahren nach einem der vorhergehenden Ansprüche, dadurch gekennzeichnet,
daß das zu klassifizierende Objekt gleichmäßig beleuchtet ist.

## Claims

1. A method of roughly classifying objects in freely definable surroundings, the method comprising a learning phase and a classifying phase,
characterized in
that, during the learning phase, typical characteristic data (102) of the same kind are extracted for a plurality of objects of an object class from the object data defining the object to be classified and are read into a classifying device (104), whereby a rough class is defined;
that, during the classifying phase, object data (100) of an object to be classified are recorded and that, from a certain degree of correspondence between the characteristic data (102) read in during the learning phase and the object data recorded, the object to be classified is recognized as belonging to the rough class defined.

2. A method according to claim 1, characterized in that,
during the learning phase, typical characteristic data (102) of the same kind are read into the classifying device (104) for a plurality of ojects of an additional object class, whereby a further rough class is defined.

3. A method according to claim 1 or 2, characterized in that
the reading in of the typical characteristic data during the learning phase includes the recording of pictorial representations of the objects of an object class.

4. A method according to claim 1 or 2, characterized in that
the reading in of the typical characteristic data during the learning phase includes the inputting of magnitude values which are calculated from a data set describing the object.

5. A method according to claim 4, characterized in that
the data set includes the Fourier coefficients of a pictorial representation of the object, or statistics on the gray levels, wavelets, etc. contained in the pictorial representation.

6. A method according to one of the claims 1 to 5, characterized in
that the classifying phase comprises the following steps:
a) recording the object data of the object to be classified;
b) comparing the recorded object data with the typical characteristic data;
c) determining the degree of correspondence between the object data and the typical characteristic data;
d) associating the object to be classified with the rough class defined, if a predetermined degree of correspondence is determined in step c); and
e) displaying the classification result.

7. A method according to one of the preceding claims;, characterized in
that the object data and the typical characteristic data are optical data.

8. A method according to one of the preceding claims, characterized in
that the object data and the typical characteristic data comprise the colour, the circumference and the texture or the size of the object to be classified.

9. A method according to one of the preceding claims, characterized in
that the object to be classified is uniformly illuminated.

## Revendications

1. Procédé de classification sommaire d'objets dans un environnement pouvant être défini librement, le procédé comprenant une phase d'apprentissage et une phase de classification, caractérisé par le fait
qu'au cours de la phase d'apprentissage, des données caractéristiques typiques similaires (102) sont, pour plusieurs objets d'une même classe d'objets, extraites des données d'objet définissant l'objet à classifier et entrées par lecture dans un dispositif de classification (104), d'où il est défini une classe sommaire; et
qu'au cours de la phase de classification sont saisies des données d'objet (100) d'un objet à classifier et l'objet à classifier est reconnu, à partir d'un degré déterminé de coïncidence des données caractéristiques (102) entrées par lecture au cours de la phase d'apprentissage avec les données d'objet saisies, comme appartenant à la classe sommaire définie.

2. Procédé suivant la revendication 1, caractérisé par le fait qu'au cours de la phase d'apprentissage sont entrées par lecture dans le dispositif de classification (104) des données caractéristiques typiques similaires (102) pour plusieurs objets d'une autre classe d'objets, d'où il est défini une autre classe sommaire.

3. Procédé suivant la revendication 1 ou 2, caractérisé par le fait que l'entrée par lecture des données caractéristiques typiques au cours de la phase d'apprentissage inclut la saisie de représentations en image des objets d'une classe d'objets.

4. Procédé suivant la revendication 1 ou 2, caractérisé par le fait que l'entrée par lecture des données caractéristiques typiques au cours de la phase d'apprentissage inclut l'entrée de nombres de mesure calculés à partir d'un jeu de données décrivant l'objet.

5. Procédé suivant la revendication 4, caractérisé par le fait que le jeu de données comporte les coefficients de Fourier d'une représentation en image de l'objet, ou des statistiques sur les valeurs de gris, les ondulations, etc. contenues dans la représentation en image.

6. Procédé suivant l'une des revendications 1 à 5, caractérisé par le fait que la phase de classification comprend les étapes suivantes consistant à:
a) saisir les données d'objet de l'objet à classifier;
b) comparer les données d'objet saisies avec les données caractéristiques typiques;
c) déterminer le degré de coïncidence des données d'objet avec les données caractéristiques typiques;
d) associer l'objet à classifier à la classe sommaire définie lorsqu'il est déterminé, à l'étape c), un degré de coïncidence prédéterminé; et
e) afficher le résultat de la classification.

7. Procédé suivant l'une des revendications précédentes, caractérisé par le fait que les données d'objet et les données caractéristiques typiques sont des données optiques.

8. Procédé suivant l'une des revendications précédentes, caractérisé par le fait que les données d'objet et les données caractéristiques typiques comprennent la couleur, le périmètre et la texture ou la grandeur de l'objet à classifier.

9. Procédé suivant l'une des revendications précédentes, caractérisé par le fait que l'objet à classifier est exposé de manière uniforme.
